# EUROPEAN PATENT APPLICATION

(11) **EP 1 427 219 A2**
(43) Date of publication of application: **09.06.2004**
(21) Application number: 03380265.3
(22) Date of filing: 17.11.2003
(51) Int. Cl.: H04N 9/29

(54) **Piece for connecting the cathode-ray tube to the chassis of a television set**

(30) Priority: 05.12.2002 ES 200202934
(71) Applicant: Richco Espanola, S.L.U., 08181 Sentmenat (Barcelona) (ES)
(72) Inventor: Forcen Feliu de la Pena, Emiliano, 08181 Sentmenat (ES)
(74) Representative: Ponti Sales, Adelaida

(57) **Abstract**

Piece (9) for connecting the cathode-ray tube (3) to the chassis of a television set, said television set having a degaussing coil (6). The piece (9) is a strip made mainly of conductive plastic and including a plurality of hooks (10) for housing the degaussing coil (6) and means of attachment (11) to the cathode-ray tube (3).

## Description

This invention relates to a piece for connecting the cathode-ray tube to the chassis of a television set.

### BACKGROUND OF THE INVENTION

In the manufacturing of television sets, in order for the set to work an electrical connection has to be made between the earth connection of the cathode-ray tube and the earth connection on the chassis of the television set.

The system used by the industry for this purpose usually consists in a metallic mesh that is connected to the lugs or ends of the tube and, with the help of a tensioning spring, runs in contact with the rear surface of the tube. Conducting cables with terminals on their ends which are attached to the television set chassis are connected to said mesh.

There are also different types of pieces for attaching degaussing coils, necessary for correct operation of the television set. These pieces are generally made of insulating plastic and have to be supplemented with other types of accessories (flanges, hooks) in order to provide a location and suitable attachment point following the tube-manufacturer's recommendations for obtaining best efficiency from the degaussing coil.

Likewise known in the art are plastics having conductive electrical properties, which find their main application in electromagnetic shielding structures.

It has been found in practice that the use of the earth connecting system described above involves a rather slow process whereby an operative fits and tensions the cable along the tube. This manual operative work is also necessary for fitting the degaussing coil, with the added disadvantage that correct attachment of the coil requires the use of supplementary flanges, whose positioning can vary significantly depending on the operative who carries out the operation.

### DESCRIPTION OF THE INVENTION

The purpose of this invention is to solve the disadvantages described by providing a simple piece that permits the earth of the cathode-ray tube to be connected electrically to the earth of the television set chassis, while also acting as a holder for the degaussing coil.

The element subject-matter of the invention is a piece for making the connection between the cathode-ray tube and the chassis of a television set, said television set having a degaussing coil, and is characterised in that said piece is a strip made mainly of conductive plastic and including a plurality of hooks for housing the degaussing coil and means of attachment to the cathode-ray tube.

These characteristics result in a simple, easily fitted and manufactured earth connecting system which eliminates the use of metallic connecting meshes and provides a substantially simplified television set manufacturing process and a considerable saving of time.

The additional function as a degaussing coil holder allows a saving on components such as flanges or carrying parts and also simplifies the operation when it comes to fitting the coil.

The hooks facilitate the winding of the degaussing coil.

Advantageously, said strip includes elongations for bringing it into contact with the surface of the cathode-ray tube, and projecting pieces for connecting it to cables which are in turn connected to the television set chassis.

These elongations and projections facilitate connections to the connecting cables and the cathode-ray tube body.

### BRIEF DESCRIPTION OF THE DRAWINGS

Other characteristics and advantages of the piece subject-matter of the invention will be clear from the description of a preferred but non-exclusive embodiment, which is illustrated by way of non-restrictive example in the attached drawings, in which:
Figure 1 is a schematic view of the rear part of the cathode-ray tube, showing the method currently used to connect the earth of said tube to that of the television set chassis.
Figure 2 is another view which shows the current method of placing the degaussing coil on the tube.
Figure 3 is a perspective view of an embodiment of the piece of the invention.
Figure 4 is a schematic view of the rear part of the television set's cathode-ray tube with the pieces made mainly of conductive plastic fitted in position and the connecting devices to earth and the degaussing coil.

### DESCRIPTION OF A PREFERRED EMBODIMENT

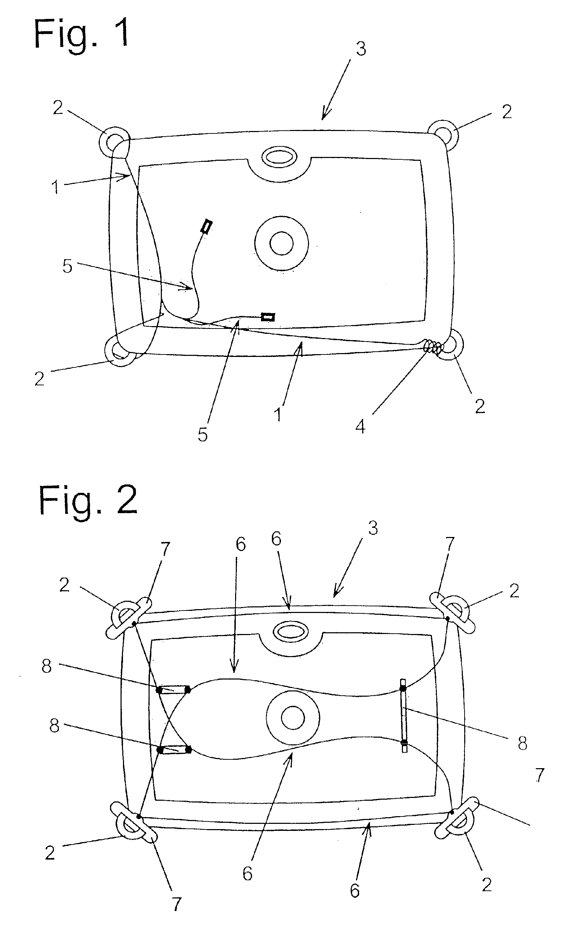

As can be seen in Figure 1, the system currently used for connecting the earth of the cathode-ray tube to that of the television set chassis comprises a braided mesh 1 which is attached to some lugs 2 situated at the ends of the tube 3. To ensure that the mesh 1 is in contact with the surface of the tube 3, a spring 4 is fitted and also prevents movement of the mesh. Connected to the mesh are some cables 5 attached at their other end to the television set chassis (not shown).

Figure 2 shows the current arrangement of the degaussing coil 6 on the tube 3. The coil 6 runs around the entire outline of the tube 3 to which it is hooked by means of some attaching pieces 7 situated on the lugs 2, with a loop being formed by some rack flanges 8 attached to the rear part of the tube 3.

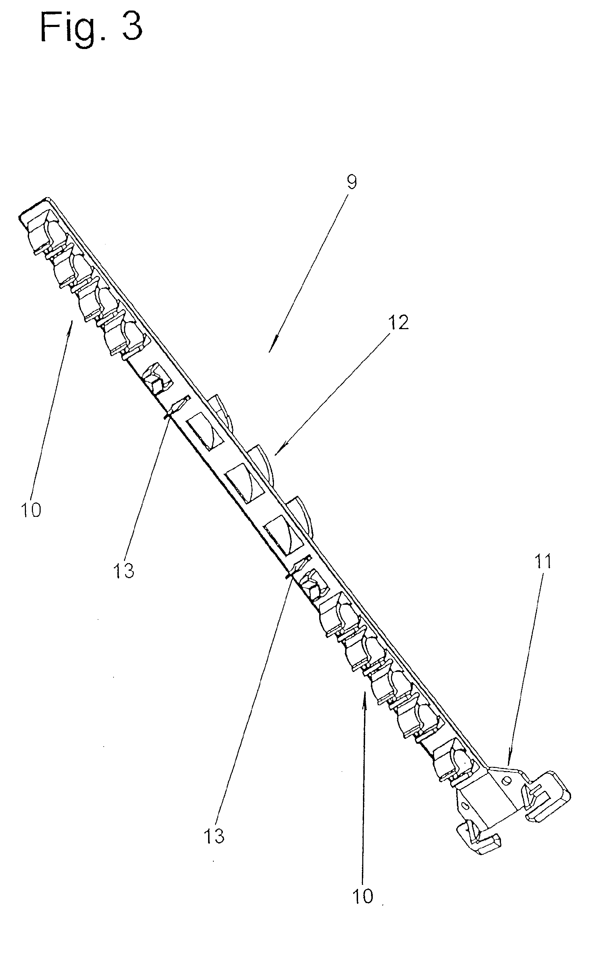

Figure 3 shows the piece made mainly of conductive plastic 9 that has a number of hooks 10 for holding the degaussing coil. Piece 9 is attached to a lug of the cathode-ray tube by means of a coupling element 11 that also acts as a holder for the coil, while it is also in contact with the surface of said tube by means of some elongations 12. The tube is connected to the chassis of the television set by connecting a conductive cable to the projecting piece 13.

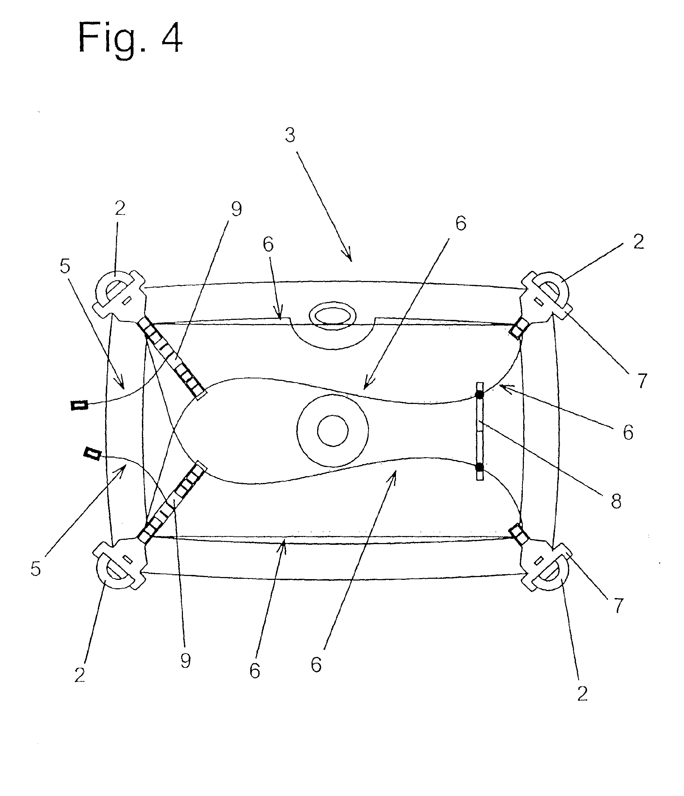

Figure 4 shows the location of the pieces 9 on the rear part of the cathode-ray tube 3. The two pieces 9 are attached to the tube 3 at its lugs 2, while they are also in contact with the central part of the tube 3 surface. The cables 5 have the function of connecting the piece 9 to the television set chassis (not shown in this figure). The element 6 is the degaussing coil, which passes all around the tube 3 and runs along its surface supported here on two holders 7, a single rack flange and the hooks of the pieces 9.

As can be seen in the drawings described, the pieces 9 considerably simplify connection of the earths of the tube 3 and of the television set chassis, as well as simplifying attachment of the degaussing coil 6. The use of several components such as the mesh 1, the spring 4, the holders 7 and rack flanges 8 currently used can be dispensed with, thereby saving a considerable amount of time and manufacturing costs.

Although the main material of which the piece of this invention is made is plastic, it can also include other parts that improve its electrical or mechanical properties, such as metallic inserts.

The details, shapes, dimensions and other ancillary elements, together with the materials used in manufacturing the pieces of the invention can be suitably replaced by others that are technically equivalent and do not depart from the essential nature of the invention nor the sphere defined by the claims included below.

## Claims

1. Piece (9) for connecting the cathode-ray tube (3) to the chassis of a television set, said television set having a degaussing coil (6), **characterised in that** said piece (9) is a strip made mainly of conductive plastic and including a plurality of hooks (10) for housing the degaussing coil (6) and means of attachment (11) to the cathode-ray tube (3).

2. Piece (9), according to Claim 1, **characterised in that** said strip includes elongations (12) for bringing it into contact with the surface of the cathode-ray tube (3), and projecting pieces (13) for connecting it to cables which are in turn connected to the television set chassis.
